# EUROPEAN PATENT APPLICATION

(11) **EP 4 693 579 A1**
(43) Date of publication of application: **11.02.2026**
(21) Application number: 23930205.2
(22) Date of filing: 24.03.2023
(51) Int. Cl.: H01M 10/0585, H01M 4/66, H01M 10/0583, H01M 10/0587, H01M 50/534, H01M 50/557, H01M 50/562

(54) **LITHIUM SECONDARY BATTERY**

(71) Applicant: TERAWATT TECHNOLOGY K.K., Yokohama-shi, Kanagawa 226-0026 (JP)
(72) Inventor: OYAMA, Gosuke, Yokohama-shi, Kanagawa 226-0026 (JP); MIYAKE, Minoru, Yokohama-shi, Kanagawa 226-0026 (JP); FUJIKI, Satoshi, Yokohama-shi, Kanagawa 226-0026 (JP); OGATA, Ken, Yokohama-shi, Kanagawa 226-0026 (JP)
(74) Representative: FRKelly
(86) International application number: PCT/JP2023/011798
(87) International publication number: WO 2024/201563

(57) **Abstract**

There is provided a technique for suppressing a decrease in output characteristics and productivity of a lithium secondary battery. The lithium secondary battery includes (a) a first laminate including a first end part exposed from a first electrode, (b) an intermediate laminate, (c) a second laminate including a second end part exposed from a second electrode, (d) a metal sheet disposed between the first end part and the second end part; and (e) an electrode tab constituting a bonding region with the first end part, the metal sheet, and the second end part, the electrode tab being electrically connected to the first laminate and the second laminate. The bonding region includes a first region being configured to integrally laminate a pair of first conductive layers, a metal sheet, and a pair of second conductive layers in a cross section in a lamination direction.

## Description

### Technical Field

An exemplary embodiment according to the present disclosure relates to a lithium secondary battery.

### Background Art

Patent Literature 1 discloses that the safety of a battery cell is improved by using a current collector in which a metal layer is formed on both surfaces of a resin film. In the resin film, the front and back of the film are separated by a resin layer having insulating properties, and thus electrical conduction cannot be obtained. Therefore, in a case of connecting an electrode tab for leading out a wiring and an electrode film, conduction cannot be obtained between the front and back of the electrode and between a plurality of the electrodes and a plurality of the electrode tabs. In this regard, Patent Literature 2 discloses that a plurality of current collectors are folded and then laminated on each metal layer in order to connect each metal layer separated by a resin layer to an electrode tab for leading out a wiring.

### Citation List

### Patent Literatures

Patent Literature 1: Japanese Patent Application Laid-Open No. H11-102711
Patent Literature 2: Japanese Patent Application Laid-Open No. 2013-016321

### Summary of Invention

### Technical Problem

The present disclosure provides a technique for suppressing a decrease in output characteristics and productivity of a lithium secondary battery.

### Solution to Problem

In one exemplary embodiment of the present disclosure, there is provided a lithium secondary battery including (a) a first laminate including a first current collector and a first electrode, the first current collector comprising a first insulating layer and a pair of first conductive layers, the pair of first conductive layers sandwiching the first insulating layer, the first current collector including a first end part exposed from the first electrode, the first electrode being disposed on the first current collector; (b) an intermediate laminate including an electrode and a separator, the electrode having a polarity different from a polarity of the first electrode; (c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part exposed from the second electrode, the second electrode being disposed on the second current collector and having the same polarity as the first electrode; (d) a metal sheet disposed between the first end part and the second end part; and (e) an electrode tab constituting a bonding region with the first end part, the metal sheet, and the second end part, the electrode tab being electrically connected to the first laminate and the second laminate, the bonding region including a first region and a second region in a cross section in the lamination direction, the first region being configured to integrally laminate the pair of first conductive layers, the metal sheet, and the pair of second conductive layers, the second region being configured to include the pair of first conductive layers sandwiching the first insulating layer, the metal sheet, and the pair of second conductive layers sandwiching the second insulating layer.

### Advantageous Effect of Invention

According to one exemplary embodiment of the present disclosure, it is possible to provide a technique for suppressing a decrease in output characteristics and productivity of a lithium secondary battery.

### Brief Description of Drawings

[Figure 1] Figure 1 is an exploded perspective view for an explanatory description of a configuration example of a lithium secondary battery according to one embodiment.
[Figure 2A] Figure 2A is a view illustrating an example of a cross-sectional structure of a first positive electrode laminate.
[Figure 2B] Figure 2B is a view illustrating an example of a cross-sectional structure of a second positive electrode laminate.
[Figure 3] Figure 3 is a plan view for an explanatory description of a positional relationship between an end part of a current collector and a metal sheet.
[Figure 4] Figure 4 is a view schematically illustrating a cross section of a bonding region.
[Figure 5] Figure 5 is a flowchart illustrating an example of a manufacturing method for a lithium secondary battery.
[Figure 6A] Figure 6A is a view illustrating an example of a cross-sectional structure of a fibrous buffer functional layer.
[Figure 6B] Figure 6B is a view illustrating an example of a state of the buffer functional layer during charging.
[Figure 6C] Figure 6C is a view illustrating an example of a cross-sectional structure of a fiber.
[Figure 7] Figure 7 is a cross-sectional view of a main part for an explanatory description of another configuration example of the lithium secondary battery.
[Figure 8] Figure 8 is a cross-sectional view of a main part for an explanatory description of another configuration example of the lithium secondary battery.
[Figure 9] Figure 9 is a perspective view for describing another configuration example of the positive electrode laminate.
[Figure 10] Figure 10 is a perspective view for describing another configuration example of the positive electrode laminate.
[Figure 11] Figure 11 is a view illustrating configurations and results of Examples and Comparative Examples.
[Figure 12] Figure 12 is a view illustrating a lamination pattern of a metal sheet in Examples and Comparative Examples.

### Description of Embodiments

Hereinafter, each embodiment according to the present disclosure will be described.

In one exemplary embodiment, there is provided a lithium secondary battery including (a) a first laminate including a first current collector and a first electrode, the first current collector comprising a first insulating layer and a pair of first conductive layers, the pair of first conductive layers sandwiching the first insulating layer, the first current collector including a first end part exposed from the first electrode, the first electrode being disposed on the first current collector; (b) an intermediate laminate including an electrode and a separator, the electrode having a polarity different from a polarity of the first electrode; (c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part exposed from the second electrode, the second electrode being disposed on the second current collector and having the same polarity as the first electrode; (d) a metal sheet disposed between the first end part and the second end part; and (e) an electrode tab constituting a bonding region with the first end part, the metal sheet, and the second end part, the electrode tab being electrically connected to the first laminate and the second laminate, the bonding region including a first region and a second region in a cross section in the lamination direction, the first region being configured to integrally laminate the pair of first conductive layers, the metal sheet, and the pair of second conductive layers, the second region being configured to include the pair of first conductive layers sandwiching the first insulating layer, the metal sheet, and the pair of second conductive layers sandwiching the second insulating layer.

In one exemplary embodiment, the first laminate and the second laminate are alternately disposed in the lamination direction multiple times with the intermediate laminate being sandwiched therebetween.

In one exemplary embodiment, the first laminate is formed of a plate-shaped sheet, and the second laminate is formed of a plate-shaped sheet which is a separate body from the first laminate.

In one exemplary embodiment, the first laminate and the second laminate are each configured to fold or wind one sheet.

In one exemplary embodiment, a total of 10 or more layers of the first laminates and the second laminates are disposed.

In one exemplary embodiment, the first end parts and the second end parts are alternately disposed in the lamination direction multiple times, and the metal sheet is disposed at at least one gap between a plurality of the first end parts and a plurality of the second end parts.

In one exemplary embodiment, the number of the metal sheets is equal to or less than three times a total number of the first end parts and the second end parts.

In one exemplary embodiment, the number or thickness of the metal sheet disposed between the first end part and the second end part is set based on positions of the first end part and the second end part in the lamination direction.

In one exemplary embodiment, the metal sheet is further disposed between the electrode tab and the first end part or the second end part which faces the electrode tab.

In one exemplary embodiment, in a case where a total thickness of the pair of first conductive layers, the pair of second conductive layers, and the metal sheet is denoted as X, and a total thickness of the first insulating layer and the second insulating layer is denoted as Y, a relationship of 0.85 < X/Y < 2.3 is satisfied.

In one exemplary embodiment, a thickness of the metal sheet is 3 µm or more and 15 µm or less.

In one exemplary embodiment, the metal sheet is formed of the same material as the first conductive layer and the second conductive layer.

In one exemplary embodiment, a maximum thickness of the first region is equal to or less than half of a maximum thickness of the second region.

In one exemplary embodiment, the first region is disposed between two of the second regions in a cross section in the lamination direction.

In one exemplary embodiment, the lithium secondary battery is such that the first electrode and the second electrode are positive electrodes.

In one exemplary embodiment, the metal sheet is a soft aluminum foil.

In one exemplary embodiment, the electrode tab is hard aluminum.

In one exemplary embodiment, a resistance of the bonding region is 5.0 mΩ or less.

In one exemplary embodiment, the first electrode and the second electrode are negative electrodes.

In one exemplary embodiment, the metal sheet is formed from at least one selected from the group consisting of Cu, Ni, Ti, Fe, a metal that does not react with Li, as well as an alloy thereof, and stainless steel.

Hereinafter, each embodiment of the present disclosure will be described in detail with reference to the drawings. It is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

As described above, Patent Literature 2 proposes that a plurality of current collectors are folded and then laminated on each metal layer in order to connect each metal layer separated by a resin layer to an electrode tab for leading out a wiring. However, this method requires a new device mechanism in which lamination is carried out while folding back the end part of the current collector for each metal layer. In addition, it is necessary to fold back the end part of the current collector in linkage with the lamination, and thus the productivity is significantly deteriorated. In addition, in this method, even in a case where the electrode tab, the current collector, and each metal layer can be mechanically bonded, the resistance of the bonding portion is increased, and the output characteristics are deteriorated. Such a problem can be solved in a lithium secondary battery 1 (hereinafter, also referred to as a "secondary battery 1") according to one embodiment.

### <Configuration example of secondary battery>

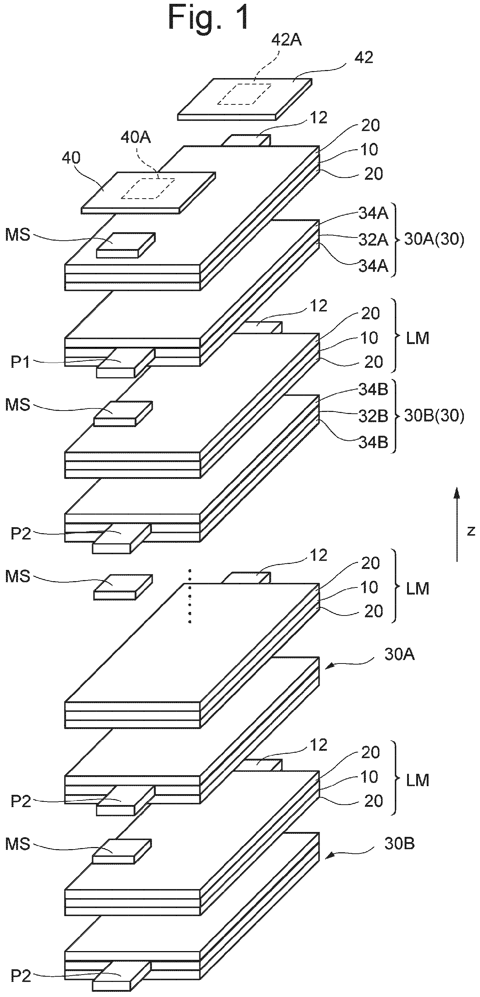

Figure 1 is an exploded perspective view for an explanatory description of a configuration example of a secondary battery 1. As illustrated in Figure 1, the secondary battery 1 is configured to include a negative electrode 10, a separator 20, a first positive electrode laminate 30A, a second positive electrode laminate 30B, a metal sheet MS, an electrode tab 40 for a positive electrode, an electrode tab 42 for a negative electrode, and the like. Hereinafter, each configuration will be described in detail.

### (Negative electrode)

In one embodiment, the negative electrode 10 is configured to include a negative electrode current collector and a negative-electrode active material disposed on the negative electrode current collector. In one embodiment, the negative electrode current collector may be composed of a negative electrode insulating layer and a pair of negative electrode conductive layers that are disposed to sandwich the negative electrode insulating layer. In one embodiment, the negative electrode insulating layer may be formed of a sheet-shaped (film-shaped) or fibrous resin. In one embodiment, the negative electrode conductive layer is formed from at least one kind selected from the group consisting of Cu, Ni, Ti, Fe, a metal that does not react with Li, as well as an alloy thereof, and stainless steel. The negative electrode conductive layer is Cu in one example. The negative electrode 10 includes the negative electrode insulating layer, and thus it can be made light as compared with a case where the negative electrode 10 is composed of only a conductive layer while ensuring the thickness (rigidity) required for the negative electrode 10. In one embodiment, the negative electrode current collector may be composed of only the negative electrode conductive layer without including the negative electrode insulating layer.

The negative-electrode active material is a substance that causes an electrode reaction, that is, an oxidation reaction and a reduction reaction in the negative electrode. The negative-electrode active material may be, for example, lithium metal, an alloy containing lithium metal, a carbon-based substance, and a metal oxide, as well as a metal that is alloyed with lithium and an alloy containing the metal, and the like. The carbon-based substance may be, for example, graphene, graphite, hard carbon, a carbon nanotube, and the like. The metal oxide may be, for example, a titanium oxide-based compound, a cobalt oxide-based compound, and the like. The above-described metal to be alloyed with lithium may be, for example, silicon, silicon oxide, germanium, tin, lead, aluminum, and gallium, as well as metals obtained by pre-doping these with lithium.

As illustrated in Figure 1, the negative electrode 10 has a negative electrode end part 12. The negative electrode end part 12 extends in a direction parallel to the main surface of the negative electrode 10. A negative-electrode active material is not formed at the negative electrode end part 12. The negative electrode end part 12 may be constituted of the same member as the negative electrode current collector, or it may be constituted as a member different from the negative electrode current collector. The negative electrode 10 is electrically connected to the electrode tab 42 for a negative electrode by interposing the negative electrode end part 12.

### (Separator)

The separator 20 is disposed on the negative electrode 10. In the example illustrated in Figure 1, the separator 20 is disposed on both surfaces of the negative electrode 10. The separator 20 physically and/or electrically isolates the negative electrode 10 and the positive electrode laminate 30 from each other and also ensures the ion conductivity of lithium ions. In one embodiment, the separator 20 may be at least one kind selected from the group consisting of a porous member having insulating properties, a polymer electrolyte, a gel electrolyte, and an inorganic solid electrolyte. As the separator 20, one kind of member may be used alone, or two or more kinds of members may be used in combination.

In a case where the separator 20 includes a porous member having insulating properties, the pores of the porous member are filled with a substance having ion conductivity (an electrolyte solution, a polymer electrolyte, a gel electrolyte, and/or the like). As a result, the separator 20 exhibits ion conductivity. A material constituting the porous member having insulating properties is not particularly limited, and examples thereof include an insulating polymer material, and specific examples thereof include polyethylene (PE) and polypropylene (PP). That is, the separator 20 may be a porous polyethylene (PE) film, a porous polypropylene (PP) film, or a laminated structure thereof.

In one embodiment, one surface or both surfaces of the separator 20 may be coated with a separator coating layer. As a result, the cycle characteristics of the secondary battery 1 can be improved. In one embodiment, the separator coating layer may be a film that is continuous with a uniform thickness in an area of 50% or more of the surface of the separator 20. In one embodiment, the separator coating layer may contain a binder such as polyvinylidene fluoride (PVDF), a mixed material of styrene butadiene rubber and carboxymethyl cellulose (SBR-CMC), or polyacrylic acid (PAA). In one embodiment, the separator coating layer may be constituted by adding inorganic particles such as silica, alumina, titania, zirconia, or magnesium hydroxide to the above-described binder.

In one embodiment, the thickness of the separator 20 (including a coating layer in a case where the separator 20 includes the coating layer) may be 3.0 µm or more and 40 µm or less. As a result, the volume occupied by the separator 20 can be reduced while the negative electrode 10 and the positive electrode laminate 30 are isolated from each other. In one embodiment, the thickness of the separator 20 may be 5.0 µm or more, 7.0 µm or more, or 10 µm or more. In one embodiment, the thickness of the separator 20 may be 30 µm or less, 20 µm or less, or 10 µm or less.

### (Intermediate laminate)

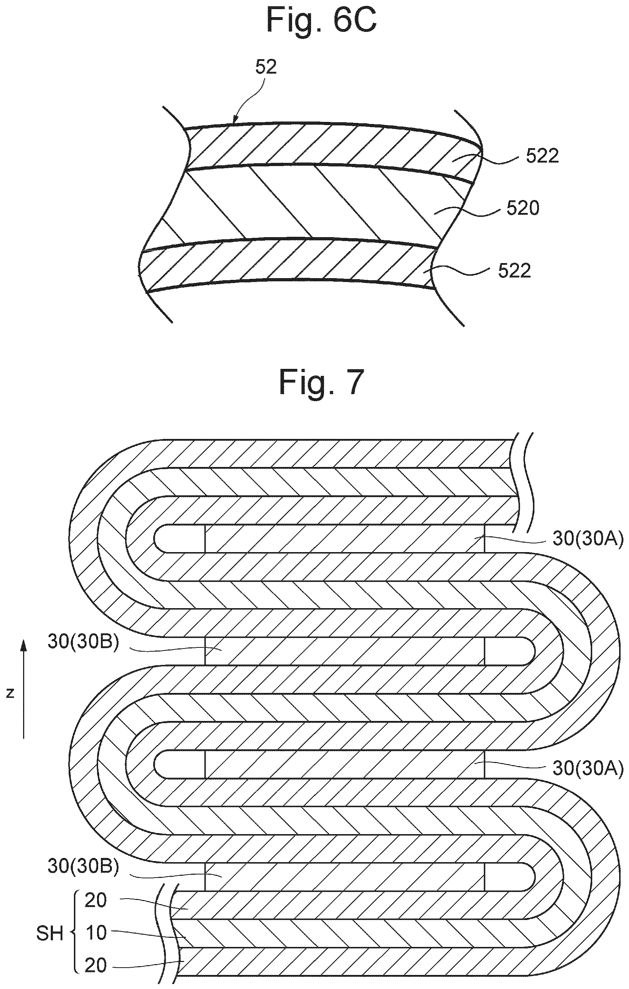

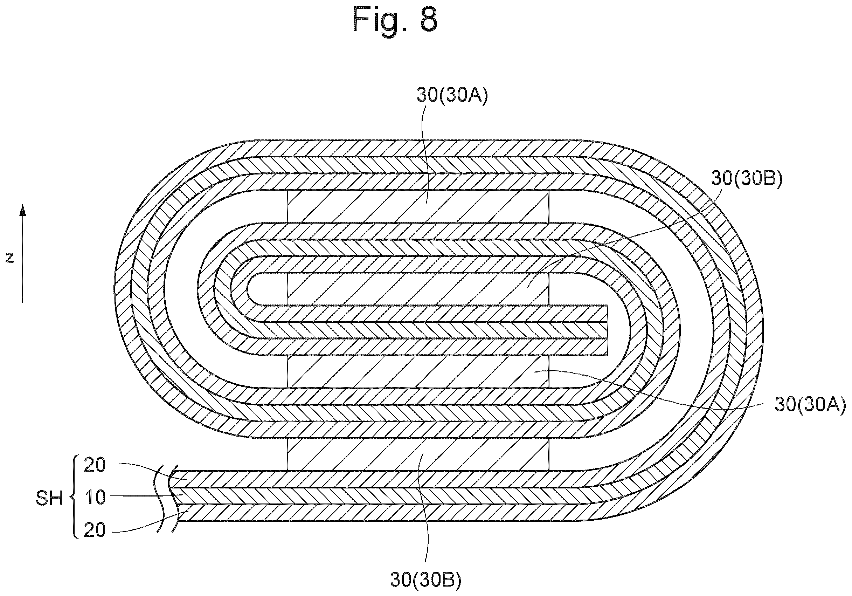

In one embodiment, the negative electrode 10 and the separator 20 constitute an intermediate laminate LM. The intermediate laminate LM may have a structure in which the separator 20, the negative electrode 10, and the separator 20 are laminated in this order in a lamination direction (a direction indicated by the arrow z in Figure 1). The secondary battery 1 includes a plurality of intermediate laminates LM. In one embodiment, as illustrated in Figure 1, each of the plurality of intermediate laminates LM may be constituted as one plate-shaped sheet. In one embodiment, the plurality of intermediate laminates LM may be composed of one sheet (an example of such an aspect will be described later with reference to Figure 7 and Figure 8).

### (Positive electrode laminate)

The first positive electrode laminate 30A includes a current collector 32A and a positive electrode 34A. The first positive electrode laminate 30A is an example of the first laminate. In one embodiment, the first positive electrode laminate may have a structure in which the positive electrode 34A, the current collector 32A, and the positive electrode 34A are laminated in this order in a lamination direction. The current collector 32A has a first end part P1 exposed from the positive electrode 34A. That is, the positive electrode 34A is not formed on the first end part P1. The first end part P1 extends from the side surface of the current collector 32A in a direction parallel to the main surface of the current collector 32A as a part of the current collector 32A.

The second positive electrode laminate 30B includes a current collector 32B and a positive electrode 34B. The second positive electrode laminate 30B is an example of the second laminate. In one embodiment, the second positive electrode laminate 30B may have a structure in which the positive electrode 34B, the current collector 32B, and the positive electrode 34B are laminated in this order in the lamination direction. The current collector 32B has a second end part P2 exposed from the positive electrode 34B. That is, the positive electrode 34B is not formed on the second end part P2. The second end part P2 extends from the side surface of the current collector 32B in a direction parallel to the main surface of the current collector 32B as a part of the current collector 32B.

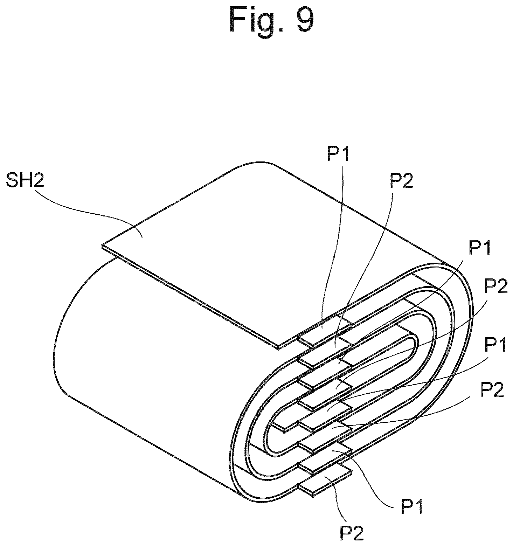

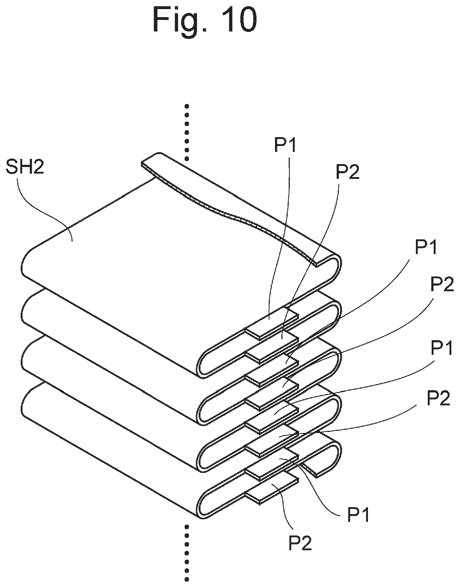

A plurality of the first positive electrode laminates 30A and a plurality of the second positive electrode laminates 30B are alternately laminated in the lamination direction by interposing the intermediate laminate LM (hereinafter, in a case where it is not necessary to distinguish the first positive electrode laminate 30A and the second positive electrode laminate 30B from each other, both are collectively referred to as a "positive electrode laminate 30"). In one embodiment, as illustrated in Figure 1, each of the plurality of positive electrode laminates 30 may be constituted as one plate-shaped sheet. In one embodiment, the plurality of positive electrode laminates 30 may be composed of one sheet (an example of such an aspect will be described later with reference to Figure 9 and Figure 10).

In one embodiment, the total number of positive electrode laminates 30 (the first positive electrode laminates 30A and the second positive electrode laminates 30B) included in the secondary battery 1 may be 5 or more, 10 or more, or 20 or more. In one embodiment, the total number of positive electrode laminates 30 included in the secondary battery 1 may be 50 or less, 40 or less, or 30 or less. In one embodiment, the energy density of the secondary battery 1 may be 300 Wh/kg or more. In one embodiment, the rated capacity of the secondary battery 1 may be 1.5 Ah or more or 5 Ah or more.

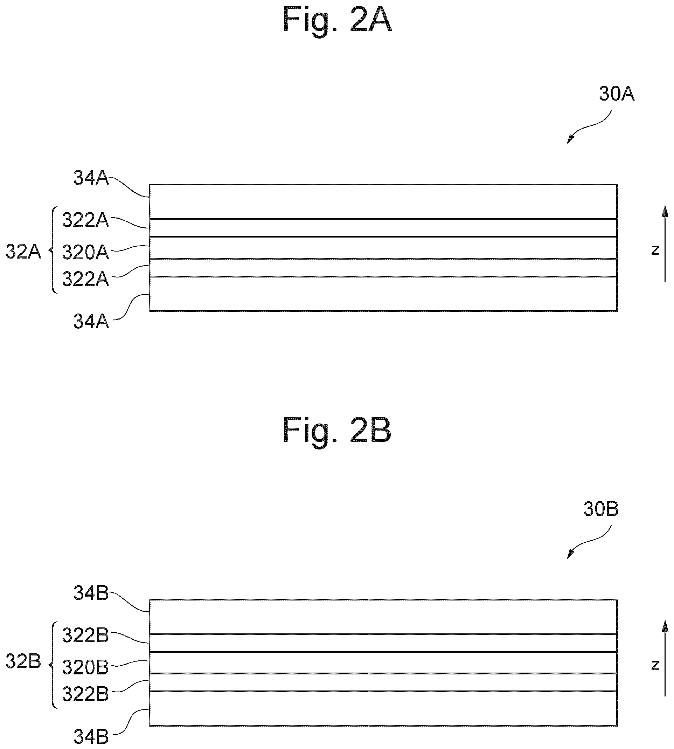

Figure 2A is a view illustrating an example of a cross-sectional structure of a first positive electrode laminate. In one embodiment, the first positive electrode laminate 30A may have a current collector 32A and positive electrodes 34A which are respectively disposed on both surfaces of the current collector 32A. The current collector 32A has an insulating layer 320A and conductive layers 322A that are formed to sandwich the insulating layer 320A.

Figure 2B is a view illustrating an example of a cross-sectional structure of a second positive electrode laminate. In one embodiment, the second positive electrode laminate 30B may have a current collector 32B and positive electrodes 34B which are respectively disposed on both surfaces of the current collector 32B. The current collector 32B has an insulating layer 320B and conductive layers 322B that are formed to sandwich the insulating layer 320B.

In one embodiment, the first positive electrode laminate 30A and the second positive electrode laminate 30B may have the same configuration. Hereinafter, in a case where it is not necessary to distinguish the respective configurations of the first positive electrode laminate 30A and the second positive electrode laminate 30B, the first positive electrode laminate 30A and the second positive electrode laminate 30B will be collectively described. In this case, the "current collector 32A" and the "current collector 32B" are collectively referred to as a "current collector 32", the "insulating layer 320A" and the "insulating layer 320B" are collectively referred to as an "insulating layer 320", the "conductive layer 322A" and the "conductive layer 322B" are collectively referred to as a "conductive layer 322", and the "positive electrode 34A" and the "positive electrode 34B" are collectively referred to as a "positive electrode 34".

The insulating layer 320 of the current collector 32 may be composed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. The insulating layer 320 may be configured to laminate at least one or more of the resins a plurality of times. In one embodiment, the insulating layer 320 is formed from a material having a melting point of 150°C or higher and 300°C or lower. In one embodiment, the thickness of the insulating layer 320 may be 3 µm or more and 10 µm or less or may be 4 µm or more and 8 µm or less.

The insulating layer 320 can function to melt, for example, in a case where abnormal heat generation occurs in an overcharged state or a high temperature state, to damage the positive electrode laminate 30, and to block a short-circuit current inside the battery. As a result, a rapid temperature rise inside the secondary battery 1 can be suppressed, and the ignition of the battery can be suppressed. That is, the insulating layer 320 can contribute to the improvement of the safety of the secondary battery 1.

The conductive layer 322 of the current collector 32 is formed on both surfaces of the insulating layer 320 so that the insulating layer 320 is sandwiched. The conductive layer 322 is in physical and/or electrical contact with the positive electrode 34 and functions to transfer electrons to and from the positive electrode 34. The conductive layer 322 is composed of a conductor that does not react with lithium ions in the battery. In one embodiment, the conductive layer 322 is composed of at least one kind of material selected from the group consisting of aluminum, titanium, stainless steel, nickel, and alloys thereof. In one example, the conductive layer 322 is aluminum or an aluminum alloy. In one embodiment, the conductive layer 322 is formed by subjecting the above-described material to vapor deposition, sputtering, electrolytic plating, or bonding on the surfaces of both sides of the insulating layer 320. In one embodiment, the thickness of each conductive layer 322 may be 0.5 µm or more and 5 µm or less, 0.7 µm or more and 3 µm or less, or 0.8 µm or more and 2.0 µm or less.

The positive electrode 34 is formed on both surfaces of the current collector 32. A material of the positive electrode 34 may be appropriately selected from publicly known materials depending on the use application. The thickness of the positive electrode 34 may be appropriately adjusted according to the desired capacity and rate characteristics of the battery. In one embodiment, the thickness of each of the positive electrodes 34 is, for example, 20 µm or more and 150 µm or less.

In one embodiment, the positive electrode 34 has a positive-electrode active material. The positive-electrode active material is a substance for holding a carrier metal in the positive electrode 34 and thus can also be referred to as a host material of the carrier metal. The positive-electrode active material is a substance for holding lithium ions in the positive electrode 34, and in this case, by charging and discharging of the battery, the positive-electrode active material is filled with lithium ions, and lithium ions are desorbed from the positive-electrode active material by charging and discharging of the battery. As a result, the stability and the output voltage of the battery can be improved.

In one embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO₂, LiNiₓCoyMn_{z}O (x + y + z = 1), LiNiₓCoyAl_{z}O (x + y + z = 1), LiNiₓMn_{y}O (x + y = 1), LiNiO₂, LiMn₂O₄, LiFePO₄, LiCoPO₄, LiFeOF, LiNiOF, and LiTiS₂. The positive-electrode active material may be used alone or in a combination of two or more kinds thereof. In one embodiment, the content of the positive-electrode active material in the positive electrode 34 may be 50% by mass or more and 100% by mass or less with respect to the entire positive electrode 34.

In one embodiment, the positive electrode 34 may contain one or more components other than the positive-electrode active material.

In one embodiment, the positive electrode 34 may contain a positive electrode sacrificial material. The positive electrode sacrificial material is a lithium-containing compound which causes an oxidation reaction and substantially does not cause a reduction reaction in a charge/discharge potential range of the positive-electrode active material.

In one embodiment, the positive electrode 34 may contain a gel electrolyte. The gel electrolyte can improve the adhesive force between the positive electrode 34 and the current collector 32. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, the positive electrode 34 may contain a conductive auxiliary agent and/or a binder. In one example, the conductive auxiliary agent is carbon black, a single-walled carbon nanotube (SWCNT), a multi-walled carbon nanotube (MWCNT), a carbon nanofiber (CF), or the like. In one example, the binder is polyvinylidene fluoride, polytetrafluoroethylene, styrene butadiene rubber, an acrylic resin, a polyimide resin, or the like. In one embodiment, the content of the conductive auxiliary agent is 0.5% by mass or more and 30% by mass or less with respect to the entire positive electrode 34. In one embodiment, the content of the binder may be 0.5% by mass or more and 30% by mass or less with respect to the entire positive electrode 34.

In one embodiment, the positive electrode 34 may contain a polymer electrolyte. In one example, the polymer electrolyte is a solid polymer electrolyte that mainly contains a polymer and an electrolyte, and a semi-solid polymer electrolyte that mainly contains a polymer, an electrolyte, and a plasticizer. In one embodiment, the total content of the polymer electrolyte may be 0.5% by mass or more and 30% by mass or less with respect to the entire positive electrode 34.

### (Metal sheet)

As illustrated in Figure 1, the metal sheet MS is disposed between the first end part P1 of at least one current collector 32A and the second end part P2 of the current collector 32B (hereinafter, the first end part P1 and the second end part P2 are collectively referred to as "end part P" in a case where it is not necessary to distinguish the first end part P1 and the second end part P2 from each other).

In one embodiment, the metal sheet MS may be disposed between all the end parts P. In one embodiment, the metal sheet MS may be disposed between a part of the end parts P, and the metal sheet MS may not be disposed between the remaining end parts P. For example, the metal sheet MS may be disposed at every plurality of end parts P.

In one embodiment, the number and thickness of the metal sheets that are disposed between the end parts P may be set based on the position of the end part P in the lamination direction. For example, two (or two or more) metal sheets MS may be disposed between the end parts P at the center of the secondary battery 1 in the lamination direction, and one metal sheet may be disposed between the end parts P at the upper part and the lower part in the lamination direction. In addition, for example, the thickness of the metal sheet MS disposed between the end parts P at the center of the secondary battery 1 in the lamination direction may be set to be larger than the thickness of the metal sheet disposed between the end parts P at the upper part and the lower part in the lamination direction. As a result, it is possible to suppress the variation in resistance between the end parts P at the center.

In one embodiment, the metal sheet MS may be disposed between the electrode tab 40 for a positive electrode and the end part P.

In one embodiment, the number of the metal sheets MS may be three times or less or may be two times or less with respect to the total number of the end parts P. In one embodiment, the number of the metal sheets MS may be the same as the total number of the end parts P, may be smaller than the total number of the end parts P, or may be equal to or less than half of the total number of the end parts P.

In one embodiment, the metal sheet MS is formed from at least one kind of material selected from the group consisting of aluminum, titanium, stainless steel, nickel, and an alloy thereof. In one example, the metal sheet MS is a hard aluminum foil. In one example, the metal sheet MS is a soft aluminum foil. The soft aluminum foil may be formed by subjecting a hard aluminum foil to a heat treatment at a high temperature (about 400°C). In one embodiment, the metal sheet MS may be formed of the same material as the conductive layer 322.

In one embodiment, the thickness of the metal sheet MS may be set based on the thickness of the insulating layer 320 and the thickness of the conductive layer 322. For example, in a case where the sum of the total thickness (A) of the respective metal sheets MS and the total thickness (B) of the respective conductive layers 322 is denoted as X (= A + B) and the total thickness of the respective insulating layers 320 is denoted as Y, the thickness of the metal sheet MS may be set such that a relationship of 0.85 < X/Y < 2.3 is satisfied. In one embodiment, 1.0 < X/Y < 2.0 may be satisfied. In one embodiment, the thickness of the metal sheet MS may be larger than the thickness of the insulating layer 320. In one embodiment, all the metal sheets MS may have the same thickness, or some of the metal sheets MS may have thicknesses different from each other. In one embodiment, the thickness of the metal sheet MS may be 3 µm or more, 5 µm or more, or 7 µm or more. In one embodiment, the thickness of the metal sheet MS may be 15 µm or less, 12 µm or less, or 10 µm or less.

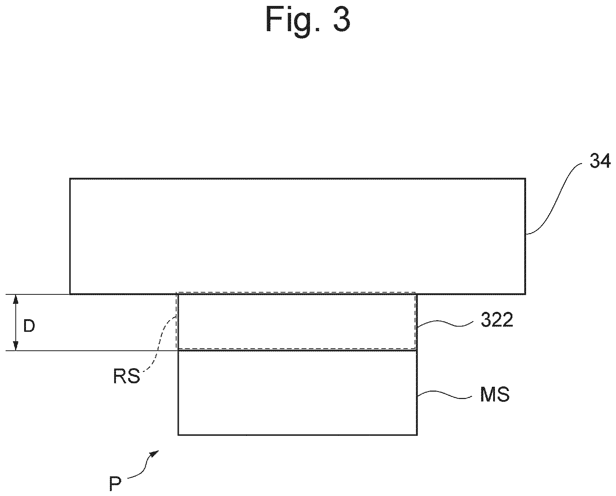

Figure 3 is a plan view for an explanatory description of a positional relationship between an end part of a current collector and a metal sheet. In one embodiment, the metal sheet MS may be configured to cover only a part of the end part P of the current collector 32 instead of covering the entire end part P. For example, as illustrated in Figure 3, the metal sheet MS may be disposed at a position spaced apart from the positive electrode 34 formed on the current collector 32 by a distance D. In this case, an insulating layer may be provided in a region RS of the end part P on the conductive layer 322, where the region RS is a region where the metal sheet MS is not disposed. As a result, in a case where the separator 20 has undergone damage or the like, it is possible to suppress the short-circuiting between the negative electrode 10 and the positive electrode 34 by interposing the conductive layer 322 and/or the metal sheet MS at the end part P. As a result, the safety of the secondary battery 1 can be improved. The insulating layer provided in the region RS may be composed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. It is noted that in one embodiment, the metal sheet MS may be configured to cover the entire surface of the end part P of the current collector.

### (Electrode tab for positive electrode)

As illustrated in Figure 1, the electrode tab 40 for a positive electrode with respect to each end part P (P1, P2) of each current collector 32 (32A, 32B) and each metal sheet MS is disposed to be lined up in a lamination direction (a direction indicated by z in Figure 1). In one embodiment, the electrode tab 40 for a positive electrode may be disposed above or below the end part P of each current collector 32 and each metal sheet MS. In one embodiment, the electrode tab 40 for a positive electrode may be disposed between a certain end part P and an end part P adjacent to the certain end part P.

The electrode tab 40 for a positive electrode has a surface 40A that overlaps with each end part P of each current collector 32 and each metal sheet MS in a case of being viewed from the lamination direction, and it is bonded to each end part P and each metal sheet MS on the surface 40A. As a result, the electrode tab 40 for a positive electrode and each positive electrode 34 of each positive electrode laminate 30 are electrically connected to each other. The electrode tab for a positive electrode is formed of a conductive material, and it may be formed of, for example, aluminum or an aluminum alloy. In one example, the electrode tab 40 may be formed of hard aluminum. In one embodiment, the thickness of the electrode tab 40 may be 0.05 mm or more and 1 mm or less or may be 0.1 mm or more and 0.5 mm or less.

In one embodiment, the electrode tab 40 for a positive electrode, each end part P, and each metal sheet MS may be bonded to each other by welding. The welding may be, for example, ultrasonic welding, laser welding, resistance welding, or spot welding. The welding is, in one example, ultrasonic welding. The bonding site between the electrode tab 40 for a positive electrode and the metal sheet MS or the end part P, the bonding site between the end parts P, and the bonding site between the end part P and the metal sheet MS may be present as one or a plurality of points (spots) or may be present as a continuous surface, as long as they are electrically connected.

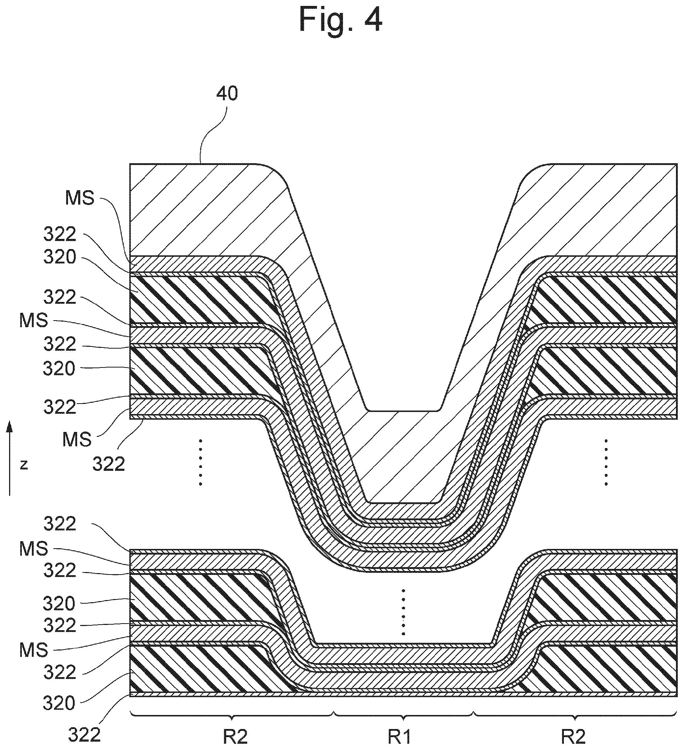

Figure 4 is a view schematically illustrating a cross section of a bonding region between the electrode tab 40 for a positive electrode, and each end part P and each metal sheet MS. In one embodiment, at least one cross section of the bonding region includes a first region R1 and a second region R2.

As illustrated in Figure 4, in the first region R1, each conductive layer 322 (322A, 322B) and the metal sheet MS are integrally laminated and are bonded to the electrode tab 40 for a positive electrode. In one embodiment, being integrally laminated includes a state in which the respective conductive layers 322 and the metal sheet MS are fused by heat or the like in a part or the whole of the respective conductive layers 322 and the metal sheet MS. The first region R1 provides a physical path for electrically connecting the electrode tab 40 to each conductive layer 322 and the metal sheet MS. In one embodiment, the first region R1 may be substantially free of the insulating layer 320 along the lamination direction (the z direction in Figure 4). In the second region R2, a pair of conductive layers 322A sandwiching the insulating layer 320A, the metal sheet MS, and a pair of conductive layers 322B sandwiching the insulating layer 320B are laminated. That is, the second region R2 is a region including the insulating layer 320 along the lamination direction (the z direction in Figure 4).

In one embodiment, as illustrated in Figure 4, the first region R1 may be constituted between two second regions R2. In one embodiment, the maximum thickness of the first region R1 may be equal to or less than half of the maximum thickness of the second region R2.

In one embodiment, the first region R1 and the second region R2 may be formed by welding. In a case where the electrode tab 40 for a positive electrode, the end part P, and the metal sheet MS are pressed and welded along the lamination direction, the insulating layer 320 is softened at the welded site and is extruded outward from the welded site in the width direction (the left-right direction in Figure 4). In addition, at the welded site, each conductive layer 322 and the metal sheet MS are thermally melted and integrated. The first region R1 and the second region R2 may be formed in this manner.

By the way, as described above, the insulating layer 320 can suppress a rapid temperature rise inside the secondary battery 1 and can suppress the ignition of the battery, for example, in a case where abnormal heat generation occurs in an overcharged state or a high temperature state. In such a current collector having a configuration in which the insulating layer is sandwiched between the conductive layers, it is difficult to ensure stable bonding quality (variation control) in the bonding between the end part of the current collector and the electrode tab or in each layer as the number of current collectors increases or as the thickness of the insulating layer increases. For example, in a case where the electrode tab and all the end parts are pressed with a strong force in order to weld the electrode tab and all the end parts, the conductive layer at the end part may be damaged or broken, for example, in a case where the conductive layer is thin. In addition, in a case where the electrode tab is welded with a force that does not damage the conductive layer, there is a concern that the bonding may be insufficient and the resistance between the end part of the current collector and the electrode tab may increase.

In this regard, in the secondary battery 1 according to one embodiment, the metal sheet MS is disposed between at least one end part P and one end part P. The metal sheet MS functions as an additional conductive layer in the bonding region and increases the proportion of the conductive layer to the insulating layer in the bonding region. As a result, the resistance of the bonding region can be reduced, and as a result, the output characteristics of the secondary battery 1 can be improved. In addition, the metal sheet MS can also function as a protective layer of the conductive layer 322 at the end part P in a case of bonding the electrode tab 40 for a positive electrode to the end part P. As a result, even in a case where the total number (the number of laminations) of the positive electrode laminates 30 of the secondary battery 1 is large, the electrode tab 40 for a positive electrode and each end part P can be strongly pressed and bonded while suppressing the damage and breakage of the conductive layer 322. As a result, the productivity of the secondary battery 1 can be improved. In addition, the increase in the resistance of the bonding region is suppressed, and the output characteristics of the secondary battery 1 can be improved. In one embodiment, the resistance of the bonding region may be 5.0 mΩ or less, may be 3.0 mΩ or less, may be 1.0 mΩ or less, or may be 0.5 mΩ or less.

### (Electrode tab for negative electrode)

As illustrated in Figure 1, the electrode tab 42 for a negative electrode is disposed to be lined up in the lamination direction (the direction indicated by z in Figure 1) with respect to each negative electrode end part 12. In one embodiment, the electrode tab 42 for a negative electrode may be disposed above or below each negative electrode end part 12. In one embodiment, the electrode tab 40 for a negative electrode may be disposed between a certain negative electrode end part 12 and a negative electrode end part 12 adjacent to the certain negative electrode end part 12. The electrode tab 42 for a negative electrode has a surface 42A that overlaps with the negative electrode end part 12 in a case of being viewed from the lamination direction, and it is bonded to the negative electrode end part 12 on the surface 42A. As a result, the electrode tab 42 for a negative electrode and each negative electrode 10 are electrically connected to each other.

In one embodiment, the electrode tab 42 for a negative electrode and each negative electrode end part 12 may be bonded by welding. The welding may be, for example, ultrasonic welding, laser welding, resistance welding, or spot welding. The bonding site between the electrode tab 42 for a negative electrode and the negative electrode end part 12 or the bonding site between the negative electrode end parts 12 may be present as one or a plurality of points (spots) as long as they are electrically connected. In addition, the bonding site may be present as a continuous surface.

### (Electrolyte solution)

In one embodiment, the secondary battery 1 may contain an electrolyte solution. The electrolyte solution is a liquid containing a solvent and an electrolyte, and it has ion conductivity. The electrolyte solution may be rephrased as a liquid electrolyte and act as a conductive path for lithium ions. Therefore, in a case where the secondary battery 1 has an electrolyte solution, the internal resistance is reduced, and the energy density, the capacity, and the cycle characteristics can be improved.

The electrolyte solution may be, for example, a solution that fills the housing (pouch) of the secondary battery 1. In addition, for example, the electrolyte solution may be infiltrated into the separator 20, and in addition, it may be held by the polymer to constitute a polymer electrolyte or a gel electrolyte.

The electrolyte contained in the electrolyte solution may be, for example, a lithium salt. The lithium salt may be, for example, one selected from the group consisting of Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄, or a combination of two or more thereof.

As a solvent to be contained in the electrolyte solution, for example, a non-aqueous solvent having a fluorine atom (hereinafter, referred to as a "fluorinated solvent") and a non-aqueous solvent having no fluorine atom (hereinafter, referred to as a "non-fluorine solvent") may be added.

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, and the like.

The non-fluorine solvent may be, for example, triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

One or two or more of the fluorinated solvents and/or the non-fluorine solvents may be freely used either alone or in combination at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### <Manufacturing method for secondary battery>

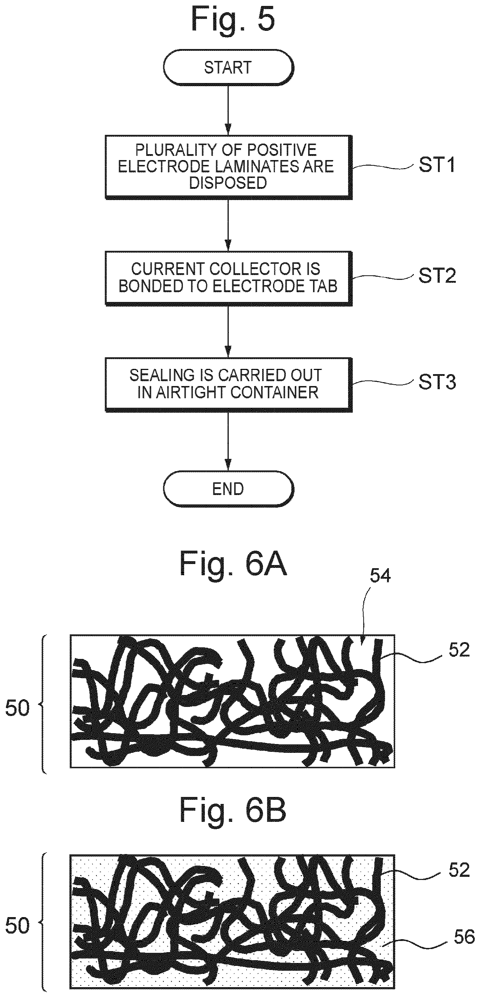

Figure 5 is a flowchart illustrating an example of a manufacturing method for the secondary battery 1. This method includes a step ST1 of disposing a plurality of positive electrode laminates, a step ST2 of bonding a current collector to an electrode tab, and a step ST3 of carrying out sealing in an airtight container.

In the step ST1, a plurality of positive electrode laminates 30 are disposed. First, a predetermined number (for example, 20) of the plurality of positive electrode laminates 30 are prepared. In addition, a predetermined number (for example, 4 to 20) of the metal sheets MS are prepared. Each metal sheet MS may be bonded in advance to the end part P of the current collector 32 of the positive electrode laminate 30 by, for example, welding and the like. Next, as illustrated in Figure 1, the positive electrode laminate 30 is disposed in the lamination direction by interposing the intermediate laminate LM. It is noted that in a case where the negative electrode 10 and the separator 20 are constituted in a sheet shape as described later, each positive electrode laminate 30 may be disposed between the separators 20 formed by folding the sheet in a zigzag shape (zigzag form) (see Figure 9) or between the separators 20 formed by winding the sheet (see Figure 10).

Next, in the step ST2, the current collector 32 of the positive electrode laminate 30 is bonded to the electrode tab 40 for a positive electrode. Specifically, the end part P of each current collector 32 and the metal sheet MS are bonded to each other such that the above-described bonding region is formed on the electrode tab 40. The bonding may be carried out by ultrasonic welding, laser welding, resistance welding, or spot welding. In addition, the negative electrode end part 12 of the negative electrode 10 is bonded to the electrode tab 42 for a negative electrode.

Next, in the step ST3, the sealing in an airtight container is carried out. That is, the molded body obtained in the step ST2 is sealed in an airtight container such as a laminated film. In this case, an electrolyte solution may be sealed in the airtight container. In the manner as described above, the secondary battery 1 is manufactured.

### <Method of using secondary battery>

The secondary battery 1 is charged and discharged by connecting the electrode tab 40 for a positive electrode to one end of the external circuit and connecting an electrode tab 42 for a negative electrode to the other end of the external circuit. The external circuit may be, for example, a resistor, a power source, an apparatus, a device, another battery, a potentiostat, or the like. The respective end parts P of the plurality of positive electrode laminates 30 may be connected to the external circuit at the same potential. In addition, each of the negative electrode end parts 12 of the plurality of negative electrodes 10 may be connected to the external circuit at the same potential.

In a case where a voltage is applied between the electrode tab 40 for a positive electrode and the electrode tab 42 for a negative electrode such that a current flows from the electrode tab 42 for a negative electrode to the electrode tab 40 for a positive electrode through an external circuit, the secondary battery 1 is charged, and lithium metal is deposited on the surface of the negative electrode 10. In a case where the electrode tab 40 for a positive electrode and the electrode tab 42 for a negative electrode in the secondary battery 1 after charging are connected through a desired external circuit, the secondary battery 1 is discharged, and the lithium metal deposited on the surface of the negative electrode 10 is electrolytically dissolved.

In one embodiment, in the secondary battery 1, a solid electrolyte interfacial layer (SEI layer) may be formed on the surface of the negative electrode 10 or the surface of the separator 20 (that is, at the interface between the negative electrode 10 and the separator 20) by the first charging (initial charging) after the assembly of the battery. The SEI layer may contain, for example, an inorganic compound containing lithium, an organic compound containing lithium, or the like. In one embodiment, the thickness of the SEI layer is 1.0 nm or more and 10 µm or less. In a case where the SEI layer is formed in the secondary battery 1, lithium metal is deposited or dissolved at the negative electrode 10 and/or an interface between the separator 20 and the SEI layer due to charging and discharging.

According to the secondary battery 1 described above, the output characteristics and the productivity of the battery are capable of being improved.

### <Modification example>

The secondary battery 1 can be variously modified without departing from the scope and gist of the present disclosure.

### (Configuration of negative electrode end part and bonding to electrode tab for negative electrode)

In one embodiment, the bonding between the negative electrode end part 12 and the electrode tab 42 for a negative electrode may be carried out in the same manner as the bonding between the end part P and the electrode tab 40 for a positive electrode. That is, a metal sheet for a negative electrode may be provided between the negative electrode end parts 12, and the negative electrode end part 12 and the electrode tab 42 for a negative electrode may be bonded to each other by interposing the metal sheet therebetween. The metal sheet may be formed from at least one selected from the group consisting of Cu, Ni, Ti, Fe, a metal that does not react with Li, as well as an alloy thereof, and stainless steel. The metal sheet may be formed of, for example, the same material as the negative electrode layer of the negative electrode 10. As illustrated in Figure 4, the cross section of the bonding region between the negative electrode end part 12, and the metal sheet and the electrode tab 42 for a negative electrode may have a first region in which the metal sheet and the conductive layer are integrally laminated, and a second region which includes an insulating layer along the lamination direction.

### (Configuration of negative electrode)

In one embodiment, the negative electrode 10 may be formed from at least one selected from the group consisting of Cu, Ni, Ti, Fe, a metal that does not react with Li, , as well as an alloy thereof, and stainless steel (SUS). The "metal that does not react with Li" may be a metal that does not react with a lithium ion or a lithium metal to form an alloy in the operating state of the secondary battery 1. In this case, the negative electrode 10 also functions as a current collector.

In one embodiment, the negative electrode 10 is substantially free of a negative-electrode active material. For example, the layer thickness of the negative-electrode active material that is deposited on the negative electrode 10 at the end of discharging (for example, a state where the open circuit voltage of the battery is 2.5 V or more and 3.6 V or less) may be 25 µm or less. In one embodiment, the layer thickness of the negative-electrode active material at the end of discharging may be 20 µm or less, 15 µm or less, 10 µm or less, or 5 µm or less, and it may be 0 µm. Since the negative electrode 10 is substantially free of a negative-electrode active material, the energy density per volume can be improved in addition to the weight energy density. It is noted that in this case, the secondary battery 1 can also be referred to as an "anode-free lithium battery", a "zero-anode lithium battery", or an "anode-less lithium battery".

In one embodiment, the negative electrode 10 does not have a negative-electrode active material before the initial charging of the battery (in a state from the assembly of the battery until the first charging is carried out). That is, in the secondary battery 1, charging and discharging may be carried out by, after the initial charging, depositing lithium metal on the negative electrode and electrolytically dissolving the deposited lithium metal. In this case, the volume and the mass occupied by the negative-electrode active material are suppressed, the volume and the mass of the entire battery are reduced, and, in principle, the energy density is increased. It is noted that the fact that "lithium metal is deposited on the negative electrode" includes not only that lithium metal is deposited on the surface of the negative electrode but also that lithium metal is deposited on the surface of the solid electrolyte interface (SEI) layer or the surface or inside of the buffer functional layer, which will be described later.

In one embodiment, in a case where the mass of lithium metal deposited on the negative electrode in a state where the voltage is 4.2 V is denoted as M_{4.2} and the same mass at a voltage of 3.0 V is denoted as M_{3.0}, M_{3.0}/M_{4.2} may be 40% or less or 35% or less. In one embodiment, the ratio M_{3.0}/M_{4.2} may be 1.0% or more, 2.0% or more, 3.0% or more, or 4.0% or more.

In one embodiment, the thickness of the negative electrode 10 may be 1.0 µm or more and 30 µm or less. As a result, the volume occupied by the negative electrode 10 in the secondary battery 1 can be reduced, and the energy density can be improved. The thickness of the negative electrode 10 may be 2.0 µm or more and 20 µm or less, 2.0 µm or more and 18 µm or less, or 3.0 µm or more and 15 µm or less.

In one embodiment, on at least a part of a surface facing the positive electrode laminate 30, the negative electrode 10 may be coated with a compound (hereinafter, also referred to as a "negative electrode coating agent") containing an aromatic ring in which two or more elements selected from the group consisting of N, S, and O are each independently bonded. The negative electrode coating agent can be held on the negative electrode 10 by coordinate bonding of the above-described element to the metal atom constituting the negative electrode 10. According to this aspect, the non-uniform deposition reaction of the lithium metal can be suppressed on the surface of the negative electrode 10, and the growth of the lithium metal deposited on the negative electrode 10 in a dendritic shape can be suppressed.

In one embodiment, at least a part of the surface of the negative electrode 10 may be coated with the negative electrode coating agent. In one embodiment, 10% or more of the surface in terms of area ratio may have the negative electrode coating agent, and 20% or more, 40% or more, 60% or more, or 80% or more of the surface may have the negative electrode coating agent.

In one embodiment, the aromatic ring contained in the negative electrode coating agent may be an aromatic hydrocarbon such as benzene, naphthalene, azulene, anthracene, or pyrene, or a heteroaromatic compound such as furan, thiophene, pyrrole, imidazole, pyrazole, pyridine, pyridazine, pyrimidine, or pyrazine. In one example, the aromatic ring is an aromatic hydrocarbon. In one example, the aromatic ring is benzene or naphthalene. In one example, the aromatic ring is benzene.

In one embodiment, the negative electrode coating agent may be constituted by bonding one or more nitrogen atoms to an aromatic ring. In one embodiment, the negative electrode coating agent may be a compound having a structure in which a nitrogen atom is bonded to an aromatic ring and one or more elements other than the nitrogen atom, which are selected from the group consisting of N, S, and O, are each independently bonded the nitrogen atom. In a case where a compound in which a nitrogen atom is bonded to an aromatic ring is used as the negative electrode coating agent, the cycle characteristics of the battery can be improved.

The negative electrode coating agent may be, for example, at least one selected from the group consisting of benzotriazole, benzimidazole, benzimidazolethiol, benzoxazole, benzothiazolethiol, benzothiazole, mercaptobenzothiazole, and derivatives thereof. In one example, the negative electrode coating agent is at least one selected from the group consisting of benzotriazole, benzimidazole, benzoxazole, mercaptobenzothiazole, and derivatives thereof.

### (Buffer functional layer)

**In** one embodiment, a porous or fibrous buffer functional layer 50 may be provided between the negative electrode 10 and the separator 20. The buffer functional layer has a solid portion (including a gel-like portion) having ion conductivity and electronic conductivity, and a pore portion composed of a gap of the solid portion. **In** this case, the lithium metal can be deposited on the surface (at the interface between the negative electrode 10 and the buffer functional layer) of the negative electrode 10 and/or inside the buffer functional layer (the surface of the solid portion of the buffer functional layer).

The buffer functional layer may be, for example, a nonwoven fabric or a woven fabric, which consists of fibers. The material constituting the buffer functional layer may be any of an inorganic material, an organic material, or a metal material, or a combination thereof. A material which has been subjected to a plating treatment for imparting conductivity to a skeleton having no electron conductivity may be used.

**In** a case where the secondary battery 1 having a buffer functional layer is charged, electrons from the negative electrode 10 and lithium ions from the separator 20 and/or the electrolyte solution are supplied to the solid portion of the buffer functional layer. As a result, electrons and lithium ions react on the surface of the solid portion of the buffer functional layer, and lithium metal is deposited in the pore portion (on the surface of the solid portion). As a result, the buffer functional layer can suppress the volume expansion of the battery due to the deposition of the lithium metal during charging. **In** addition, the buffer functional layer contributes to the increase in the surface area of the place where lithium metal is deposited. As a result, the reaction rate at which lithium metal is deposited is gently controlled, the formation of dendrites is suppressed, and as a result, the cycle characteristics of the secondary battery can be improved.

In one embodiment, the porosity of the buffer functional layer may be, for example, 50% or more, 60% or more, or 70% or more in terms of % by volume. The porosity of the buffer functional layer may be, for example, 97% or less, 95% or less, or 90% or less in terms of % by volume.

In one embodiment, the thickness of the buffer functional layer may be, for example, 100 µm, 50 µm or less, or 30 µm or less. The thickness of the buffer functional layer may be, for example, 1 µm, 4 µm or more, or 7 µm or more.

In one embodiment, in a case where the buffer functional layer contains a metal capable of reacting with lithium, the total capacity of the negative electrode 10 and the buffer functional layer may be sufficiently small with respect to the capacity of the positive electrode 34, and it may be, for example, 20% or less, 15% or less, 10% or less, or 5% or less.

In one embodiment, the weight per surface of the buffer functional layer may be 3 g/m² or more and 20 g/m² or less, 4 g/m² or more and 15 g/m², or 5 g/m² or more and 10 g/m² or less.

Figure 6A is a view illustrating an example of a cross-sectional structure of the fibrous buffer functional layer 50. Figure 6B is a view illustrating an example of a state of the buffer functional layer 50 during charging. Figure 6C is a view illustrating an example of a cross-sectional structure of a fiber 52.

As illustrated in Figure 6A, the buffer functional layer 50 has the fiber 52 (solid portion) and a pore portion 54 composed of a gap surrounding the fiber 52. The fiber 52 has ion conductivity and electronic conductivity.

As illustrated in Figure 6B, in a case where the secondary battery 1 having the buffer functional layer 50 is charged, lithium metal 56 is deposited such that the pore portion 54 is filled on the surface of the fiber 52 (solid portion) of the buffer functional layer.

As illustrated in Figure 6C, the fiber 52 may be composed of a fibrous ion conductive layer 520 and an electrical conductive layer 522 that covers the surface of the ion conductive layer 520.

The diameter of the ion conductive layer 520 may be 30 nm or more and 5,000 nm or less, 50 nm or more and 2,000 nm or less, 70 nm or more and 1,000 nm or less, or 80 nm or more and 500 nm or less. The thickness of the electrical conductive layer 522 may be 1 nm or more and 300 nm or less, 5 nm or more and 200 nm or less, or 10 nm or more and 150 nm or less.

### (Intermediate laminate)

Each of Figure 7 and Figure 8 is a cross-sectional view of a main part for an explanatory description of another configuration example of the lithium secondary battery. As illustrated in Figure 7 and Figure 8, in one embodiment, the negative electrode 10 and the separator 20 disposed on both surfaces of the negative electrode 10 may be constituted as one sheet SH.

In one embodiment, as illustrated in Figure 7, the sheet SH may be alternately folded a plurality of times at an acute angle to constitute an intermediate laminate, and the respective positive electrode laminates 30 (30A and 30B) may be disposed between the separators facing each other in the intermediate laminate.

In one embodiment, as illustrated in Figure 8, the sheet SH may be wound to be folded back a plurality of times to constitute an intermediate laminate, and the respective positive electrode laminates 30 (30A and 30B) may be disposed between the separators facing each other in the intermediate laminate. In one embodiment, each positive electrode laminate 30 may be constituted by winding one sheet as described later (see Figure 9).

In the examples illustrated in Figure 7 and Figure 8, even in a case where the negative electrode 10 or the separator 20 is extremely thin, it can be integrally treated as the sheet SH, and thus the productivity of the battery can be improved. In addition, in the sheet SH, since the negative electrode 10 sandwiched between the separators 20 is subjected to a physical pressure from both surfaces, wrinkling is unlikely to occur in the negative electrode 10 in a case where the sheets SH are laminated, which makes it possible to improve the cycle characteristics of the battery.

### (Positive electrode laminate)

Each of Figure 9 and Figure 10 is a perspective view for an explanatory description of another configuration example of the positive electrode laminate. In one embodiment, as illustrated in Figure 9, each positive electrode laminate 30 may be constituted by winding a single sheet SH2 including the current collector 32 and the positive electrode 34 disposed on both surfaces of the current collector 32, a plurality of times. In one embodiment, as illustrated in Figure 10, each positive electrode laminate 30 may be constituted by alternately folding one sheet SH2 at an acute angle a plurality of times. In the examples illustrated in Figure 9 and Figure 10, even in a case where the current collector 32 or the positive electrode 34 is extremely thin, it can be integrally treated as the sheet SH2, and thus the productivity of the battery can be improved.

### <Examples>

Next, Examples and Comparative Examples are described below. The present disclosure is not limited by the following examples and comparative examples.

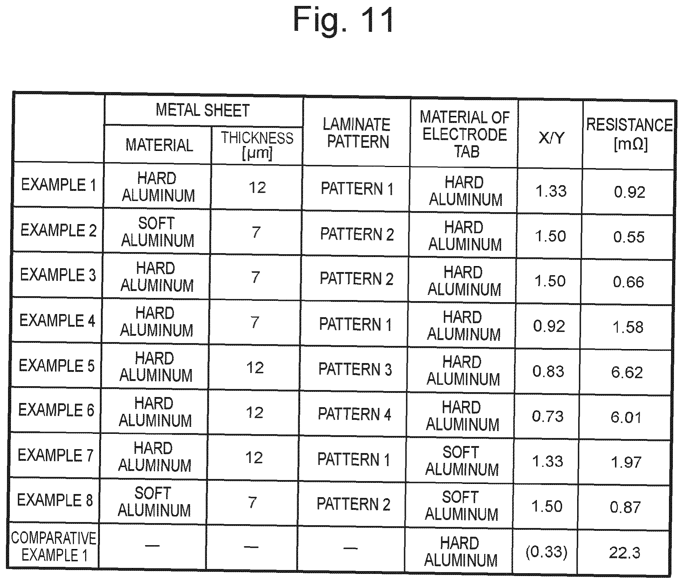

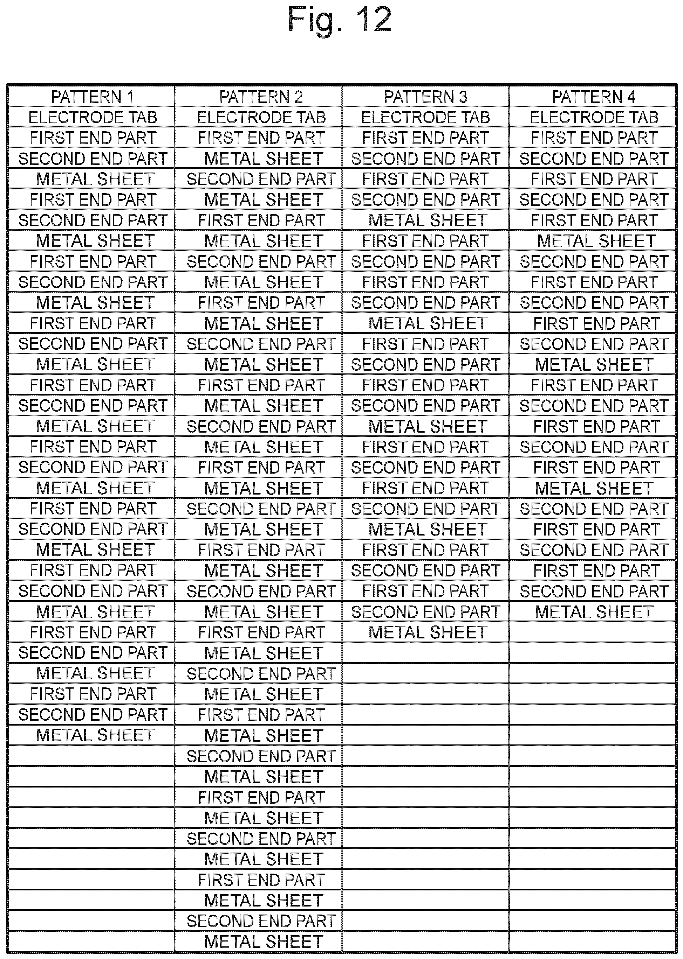

Figure 11 is a view illustrating configurations and results of Examples and Comparative Examples. Figure 12 is a view illustrating a lamination pattern of a metal sheet in Examples and Comparative Examples. "Pattern 1" to "Pattern 4" in Figure 12 correspond to "Pattern 1" to "Pattern 4" shown in "Lamination pattern" in Figure 11.

### (Example 1)

A lithium secondary battery having the structure illustrated in Figure 1 was created as Example 1. First, a negative electrode 10 was prepared. That is, as a current collector for a negative electrode, a current collector in which Cu was subjected to vapor deposition to a thickness of 1.0 µm on both surfaces of polyethylene terephthalate (PET) having a thickness of 6 µm was prepared. Then, a mixed material obtained by mixing 97 parts by mass of graphite as a negative-electrode active material, 0.5 parts by mass of carbon black as a conductive auxiliary agent, 1.5 parts by mass of carboxymethyl cellulose (CMC) as a binder, and 1.0 parts by mass of styrene-butadiene rubber (SBR) as a binder in water as a solvent was prepared. This mixed material was applied onto both surfaces of the current collector for a negative electrode such that the weight per unit area was 15 mg/cm², and pressing and then cutting into a predetermined size was carried out. As a result, 21 negative electrodes 10 were obtained. Then, a metal sheet for a negative electrode (a copper foil having a thickness of 4 µm) was attached to the end part 12 of each of the negative electrodes 10 by ultrasonic welding. Next, as the separator 20, a sheet (thickness: 15 µm) having a surface coated with a mixture of polyvinylidene fluoride (PVDF) and Al₂O₃ was prepared. Then, both surfaces of the negative electrode 10 were sandwiched and pressed with the separator 20 to obtain an intermediate laminate LM.

As the current collector 32 of the positive electrode laminate 30, a current collector obtained by subjecting both surfaces of a film-shaped polyethylene terephthalate (PET, insulating layer 320) having a thickness of 6 µm to vapor deposition with Al (conductive layer 322) to 1.0 µm was used. As the positive electrode 34, a mixture obtained by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent was used. The positive electrode 34 was applied onto both surfaces of the current collector 32 such that the weight per unit area was 23 mg/cm² to obtain a positive electrode laminate 30. Twenty positive electrode laminates 30 were prepared. Then, the metal sheet MS having the configuration shown in Figure 11 was attached to the end part P of the current collector 32 of each of the ten positive electrode laminates 30 by ultrasonic welding. In addition, an electrode tab 40 (thickness: 0.2 mm) for a positive electrode made of a material shown in Figure 11 was prepared. As the electrode tab 42 for a negative electrode, copper having a thickness of 0.2 mm, which had been subjected to nickel plating, was used.

Next, the intermediate laminate LM and the positive electrode laminate 30 were alternately laminated. In this case, the positive electrode laminate 30 in which the metal sheet MS was attached to the end part P and the positive electrode laminate 30 in which the metal sheet MS was not attached were appropriately selected to obtain the lamination pattern 1 shown in Figure 12. Then, each end part P of the current collector 32 and the metal sheet MS were overlapped with each other and bonded to the electrode tab 40 for a positive electrode by ultrasonic welding. In addition, the negative electrode end part 12 and the negative electrode metal sheet were overlapped with each other and bonded to the electrode tab 42 for a negative electrode by ultrasonic welding. Such a structural body was inserted into a laminate exterior body and sealed together with an electrolyte solution to obtain a lithium secondary battery. As the electrolyte solution, an electrolyte solution obtained by adding 2 parts by weight of vinylene carbonate (VC) to an electrolyte solution in which lithium hexafluorophosphate (LiPF₆) was dissolved in a solvent obtained by mixing ethylene carbonate (EC), dimethyl carbonate (DMC), and ethyl methyl carbonate (EMC) at a ratio of 30:35:35 in terms of parts by mass to have a concentration of 1 M was used.

### (Examples 2 to 8)

In Examples 2 to 8, as shown in Figure 11 and Figure 12, a lithium secondary battery was created in the same manner as in Example 1, except that the lamination pattern of the metal sheet MS, the electrode tab 40 for a positive electrode, and the metal sheet MS was different.

### (Comparative Example 1)

In Comparative Example 1, a lithium secondary battery was created in the same manner as in Example 1, except that the metal sheet MS was not used.

In Figure 11, in Examples 1 to 8, "X/Y" is a value obtained by dividing X by Y in a case where the sum of the total thickness (A) of the respective metal sheets MS and the total thickness (B) of the respective conductive layers 322 is denoted as X (= A + B) and the total thickness of the respective insulating layers 320 is denoted as Y. In Comparative Example 1, the metal sheet MS is not used, and thus X is the total thickness of the respective conductive layers.

In Figure 11, "Resistance [mΩ]" is a resistance in a bonding region between the electrode tab 40 for a positive electrode and the end part P, and it is measured as follows. That is, each of the lithium secondary batteries according to Examples and Comparative Examples was disassembled and subjected to measurement according to a four-terminal method. The positive electrode of the clip-type lead of a resistance meter BT3561 manufactured by HIOKI E.E. CORPORATION was connected to the electrode tab 40 for a positive electrode, the negative electrode was sandwiched with clips at a site where the positive-electrode active material of the positive electrode laminate was not applied in one of the twenty positive electrode laminates 30, and the impedance at 1 kHz was measured with a 4-terminal lead. Next, the measurement was carried out by connecting the negative electrode to another positive electrode laminate, and the average value from the twenty negative electrode laminates was determined. Such an average value is "Resistance (mΩ)" shown in Figure 11. As shown in Figure 11, the resistance of the bonding region in Examples 1 to 8 was markedly low as compared with that in Comparative Example 1.

In a case where a nail piercing test (a test for checking whether or not a battery ignites or explodes in a case where a nail is caused to penetrate each battery to cause an internal short circuit) was carried out on the lithium secondary batteries according to Examples 1 to 8 and Comparative Example 1, none of the batteries ignited or exploded.

### (Comparative Example 2)

In Comparative Example 2, a lithium secondary battery was created in the same manner as in Example 1, except that the metal sheet for a negative electrode was not used.

In Example 1 and Comparative Example 2, the resistance in the bonding region between the electrode tab 42 for a negative electrode and the negative electrode end part 12 was measured as described above. In Comparative Example 2, the resistance was 19.4 [mΩ]. On the other hand, in Example 1, the resistance was 0.88 mΩ, which was markedly low as compared with that in Comparative Example 2.

The embodiments of the present disclosure further include the following aspects.

### (Addendum 1)

A lithium secondary battery including:
(a) a first laminate including a first current collector and a first electrode, the first current collector comprising a first insulating layer and a pair of first conductive layers, the pair of first conductive layers sandwiching the first insulating layer, the first current collector including a first end part exposed from the first electrode, the first electrode being disposed on the first current collector;
(b) an intermediate laminate including an electrode and a separator, the electrode having a polarity different from a polarity of the first electrode;
(c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part exposed from the second electrode, the second electrode being disposed on the second current collector and having the same polarity as the first electrode;
(d) a metal sheet disposed between the first end part and the second end part; and
(e) an electrode tab constituting a bonding region with the first end part, the metal sheet, and the second end part, the electrode tab being electrically connected to the first laminate and the second laminate, the bonding region including a first region and a second region in a cross section in the lamination direction,
the first region being configured to integrally laminate the pair of first conductive layers, the metal sheet, and the pair of second conductive layers, the second region being configured to include the pair of first conductive layers sandwiching the first insulating layer, the metal sheet, and the pair of second conductive layers sandwiching the second insulating layer.

### (Addendum 2)

The lithium secondary battery according to Addendum 1, in which the first laminate and the second laminate are alternately disposed in the lamination direction multiple times with the intermediate laminate being sandwiched therebetween.

### (Addendum 3)

The lithium secondary battery according to Addendum 1 or Addendum 2,
in which the first laminate is formed of a plate-shaped sheet, and
the second laminate is formed of a plate-shaped sheet which is a separate body from the first laminate.

### (Addendum 4)

The lithium secondary battery according to Addendum 1 or Addendum 2, in which the first laminate and the second laminate are each configured to fold or wind one sheet.

### (Addendum 5)

The lithium secondary battery according to any one of Addendum 1 to Addendum 4, in which a total of 10 or more layers of the first laminates and the second laminates are disposed.

### (Addendum 6)

The lithium secondary battery according to any one of Addendum 1 to Addendum 5,
in which the first end parts and the second end parts are alternately disposed in the lamination direction multiple times, and
the metal sheet is disposed at at least one gap between a plurality of the first end parts and a plurality of the second end parts.

### (Addendum 7)

The lithium secondary battery according to any one of Addendum 1 to Addendum 6, in which the number of the metal sheets is equal to or less than three times a total number of the first end parts and the second end parts.

### (Addendum 8)

The lithium secondary battery according to any one of Addendum 1 to Addendum 7, in which the number or thickness of the metal sheet disposed between the first end part and the second end part is set based on positions of the first end part and the second end part in the lamination direction.

### (Addendum 9)

The lithium secondary battery according to any one of Addendum 1 to Addendum 8, in which the metal sheet is further disposed between the electrode tab and the first end part or the second end part which faces the electrode tab.

### (Addendum 10)

The lithium secondary battery according to any one of Addendum 1 to Addendum 9, in which in a case where a total thickness of the pair of first conductive layers, the pair of second conductive layers, and the metal sheet is denoted as X, and a total thickness of the first insulating layer and the second insulating layer is denoted as Y, a relationship of 0.85 < X/Y < 2.3 is satisfied.

### (Addendum 11)

The lithium secondary battery according to any one of Addendum 1 to Addendum 10, in which a thickness of the metal sheet is 3 µm or more and 15 µm or less.

### (Addendum 12)

The lithium secondary battery according to any one of Addendum 1 to Addendum 11, in which the metal sheet is formed of the same material as the first conductive layer and the second conductive layer.

### (Addendum 13)

The lithium secondary battery according to any one of Addendum 1 to Addendum 12, in which a maximum thickness of the first region is equal to or less than half of a maximum thickness of the second region.

### (Addendum 14)

The lithium secondary battery according to any one of Addendum 1 to Addendum 13, in which the first region is disposed between two of the second regions in a cross section in the lamination direction.

### (Addendum 15)

The lithium secondary battery according to any one of Addendum 1 to Addendum 14, in which the first electrode and the second electrode are positive electrodes.

### (Addendum 16)

The lithium secondary battery according to Addendum 15, in which the metal sheet is a soft aluminum foil.

### (Addendum 17)

The lithium secondary battery according to Addendum 15 or Addendum 16, in which the electrode tab is hard aluminum.

### (Addendum 18)

The lithium secondary battery according to any one of Addendum 15 to Addendum 17, in which a resistance of the bonding region is 5.0 mΩ or less.

### (Addendum 19)

The lithium secondary battery according to any one of Addendum 1 to Addendum 14, in which the first electrode and the second electrode are negative electrodes.

### (Addendum 20)

The lithium secondary battery according to Addendum 19, in which the metal sheet is formed from at least one selected from the group consisting of Cu, Ni, Ti, Fe, a metal that does not react with Li, as well as an alloy thereof, and stainless steel.

Each of the above embodiments is described for the purpose of description, and it is not intended to limit the scope of the present disclosure. Each of the above embodiments may be modified in various ways without departing from the scope and purpose of the present disclosure. For example, some constitutional elements in one embodiment can be added to other embodiments. In addition, some constitutional elements in one embodiment can be replaced with corresponding constitutional elements in another embodiment.

### Reference Signs List

1: lithium secondary battery
10: negative electrode
20: separator
30: positive electrode laminate
32: current collector
320: insulating layer
322: conductive layer
34: positive electrode
40: electrode tab for positive electrode
42: electrode tab for negative electrode
M: metal sheet
LM: intermediate laminate
R1: first region
R2: second region

## Claims

1. A lithium secondary battery comprising:
(a) a first laminate including a first current collector and a first electrode, the first current collector comprising a first insulating layer and a pair of first conductive layers, the pair of first conductive layers sandwiching the first insulating layer, the first current collector including a first end part exposed from the first electrode, the first electrode being disposed on the first current collector;
(b) an intermediate laminate including an electrode and a separator, the electrode having a polarity different from a polarity of the first electrode;
(c) a second laminate disposed to be spaced apart from the first laminate in a lamination direction by interposing the intermediate laminate, the second laminate including a second current collector and a second electrode, the second current collector comprising a second insulating layer and a pair of second conductive layers, the pair of second conductive layers sandwiching the second insulating layer, the second current collector including a second end part exposed from the second electrode, the second electrode being disposed on the second current collector and having the same polarity as the first electrode;
(d) a metal sheet disposed between the first end part and the second end part; and
(e) an electrode tab constituting a bonding region with the first end part, the metal sheet, and the second end part, the electrode tab being electrically connected to the first laminate and the second laminate, the bonding region including a first region and a second region in a cross section in the lamination direction, the first region being configured to integrally laminate the pair of first conductive layers, the metal sheet, and the pair of second conductive layers, the second region being configured to include the pair of first conductive layers sandwiching the first insulating layer, the metal sheet, and the pair of second conductive layers sandwiching the second insulating layer.

2. The lithium secondary battery according to Claim 1, wherein the first laminate and the second laminate are alternately disposed in the lamination direction multiple times with the intermediate laminate being sandwiched therebetween.

3. The lithium secondary battery according to Claim 2,
wherein the first laminate is formed of a plate-shaped sheet, and
the second laminate is formed of a plate-shaped sheet which is a separate body from the first laminate.

4. The lithium secondary battery according to Claim 2, wherein the first laminate and the second laminate are each configured to fold or wind one sheet.

5. The lithium secondary battery according to Claim 2, wherein a total of 10 or more layers of the first laminates and the second laminates are disposed.

6. The lithium secondary battery according to Claim 2,
wherein the first end parts and the second end parts are alternately disposed in the lamination direction multiple times, and
the metal sheet is disposed at at least one gap between a plurality of the first end parts and a plurality of the second end parts.

7. The lithium secondary battery according to Claim 6, wherein the number of the metal sheets is equal to or less than three times a total number of the first end parts and the second end parts.

8. The lithium secondary battery according to Claim 6, wherein the number or thickness of the metal sheet disposed between the first end part and the second end part is set based on positions of the first end part and the second end part in the lamination direction.

9. The lithium secondary battery according to Claim 6, wherein the metal sheet is further disposed between the electrode tab and the first end part or the second end part which faces the electrode tab.

10. The lithium secondary battery according to any one of Claims 1 to 9, wherein in a case where a total thickness of the pair of first conductive layers, the pair of second conductive layers, and the metal sheet is denoted as X, and a total thickness of the first insulating layer and the second insulating layer is denoted as Y, a relationship of 0.85 < X/Y < 2.3 is satisfied.

11. The lithium secondary battery according to any one of Claims 1 to 9, wherein a thickness of the metal sheet is 3 µm or more and 15 µm or less.

12. The lithium secondary battery according to any one of Claims 1 to 9, wherein the metal sheet is formed of the same material as the first conductive layer and the second conductive layer.

13. The lithium secondary battery according to any one of Claims 1 to 9, wherein a maximum thickness of the first region is equal to or less than half of a maximum thickness of the second region.

14. The lithium secondary battery according to Claim 13, wherein the first region is disposed between two of the second regions in a cross section in the lamination direction.

15. The lithium secondary battery according to any one of Claims 1 to 9, wherein the first electrode and the second electrode are positive electrodes.

16. The lithium secondary battery according to Claim 15, wherein the metal sheet is a soft aluminum foil.

17. The lithium secondary battery according to Claim 16, wherein the electrode tab is hard aluminum.

18. The lithium secondary battery according to Claim 15, wherein a resistance of the bonding region is 5.0 mΩ or less.

19. The lithium secondary battery according to any one of Claims 1 to 9, wherein the first electrode and the second electrode are negative electrodes.

20. The lithium secondary battery according to Claim 19, wherein the metal sheet is formed from at least one selected from the group consisting of Cu, Ni, Ti, Fe, a metal that does not react with Li, as well as an alloy thereof, and stainless steel.
